# EUROPEAN PATENT SPECIFICATION

(11) **EP 0 674 095 B1**
(45) Date of publication and mention of the grant of the patent: **03.09.2003**
(21) Application number: 95103506.2
(22) Date of filing: 10.03.1995
(51) Int. Cl.: E21B 43/08

(54) **Well screen with coiled element**
Bohrlochfilter mit gewickeltem Element
Filtre de puits avec élément enroulé

(30) Priority: 11.03.1994 JP 6794594
(43) Date of publication of application: 27.09.1995
(73) Proprietor: NAGAOKA INTERNATIONAL CORPORATION, Minami Kawachi-gun, Osaka-fu (JP)
(72) Inventor: Nagaoka, Tadayoshi, Nagaoka International Corp., Minami Kawachi-gun, Osaka-fu (JP); Sparlin, Derry D., Spring, Texas 77379 (US)
(74) Representative: DIEHL GLAESER HILTL & PARTNER

(56) References cited:
- EP-A- 0 309 186
- US-A- 2 101 537
- US-A- 2 346 885
- US-A- 2 696 264
- US-A- 2 797 893
- US-A- 2 804 926
- US-A- 3 633 674
- US-A- 4 402 551
- US-A- 5 230 726

## Description

This invention relates to a well screen suitable for use in wells including for oil, gas, water and pollution remedy wells.

Many types of screens and filtering devices are known in the art that are designed to exclude sand and other solids from fluids and gases produced from oil gas, water and pollution remedy wells while supporting subterranean geological formation. These devices are often used with filter aids, such as gravel and/or sand, which are either incorporated within the device or separately placed surrounding the device.

Wire wrapped screens and prepacked screens are examples of devices used inside a drilled hole. The drilled hole may be left open or may have a casing or liner cemented and perforated prior to positioning such a device. Openings in such screens may be designed to stop or bridge undesirable solids contained in fluids or gases.

Screens and well liners are often surrounded by filter aids. The filter aids consist commonly of gravel. When used with filter aids or gravel, the openings in the screens and liners are designed to stop or bridge the filter aid, and the filter aid is designed to stop or bridge the undesirable solids contained in the produced fluids or gases.

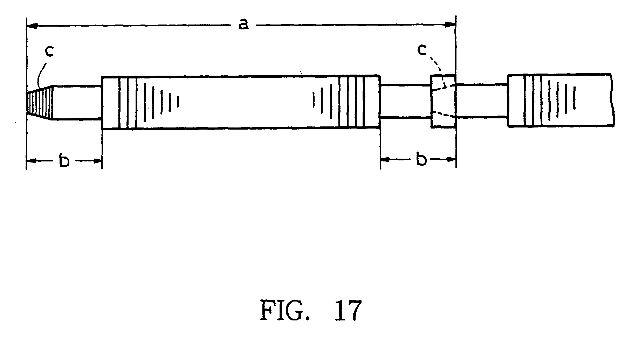

As shown in Fig. 17, screen units a of conventional well screens usually consist of lengths (joints) of from 5 to 10 meters with short lengths of blank (non-screen) pipe at each end. The purposes of the short lengths of blank pipe b at each end are (1) to provide a means of connecting the joints together at a well site and (2) to facilitate holding each screen joint in a well-head as the joints are assembled for lowering into the well.

The length of blank sections at the ends of each joint of screen must be long enough to allow for threads required for connecting the joints, and must be long enough to allow room to hang each joint from the top of a rig provided about the well-head while joints are connected together. The total blank length is commonly 0.5 to 1 meter, after two joints have been connected together.

A screen consisting of screen units which are connected together is commonly lowered from the rig and centralized in a well bore to a position adjacent to a fluid or gas productive subterranean formation, wherefrom the fluid or gas can flow radially through the screen. The screen prevents entrance of undesirable solid particles and allows flow of fluid or gas inside the screen to be produced to the surface.

A problem common to the conventional well screens is that it consumes much time and labor to connect adjacent screen units together at a well site and to lower the connected screen units a into the well.

For improving efficiency of production of oil from an oil well, there is an increasing tendency to produce oil from high angle well which is deviating from the vertical by 45 degrees to 90 degrees plus by passing a well screen into this high angle well. The length of a screen in such a high angle well often reaches 2,000 m or more and in a well using such a very long screen the work for connecting screen units one after another at a well site causes a serious problem.

Another problem arising from a high angle wellbore is that gravel is not packed uniformly due to existence of the blank portion in the screen.

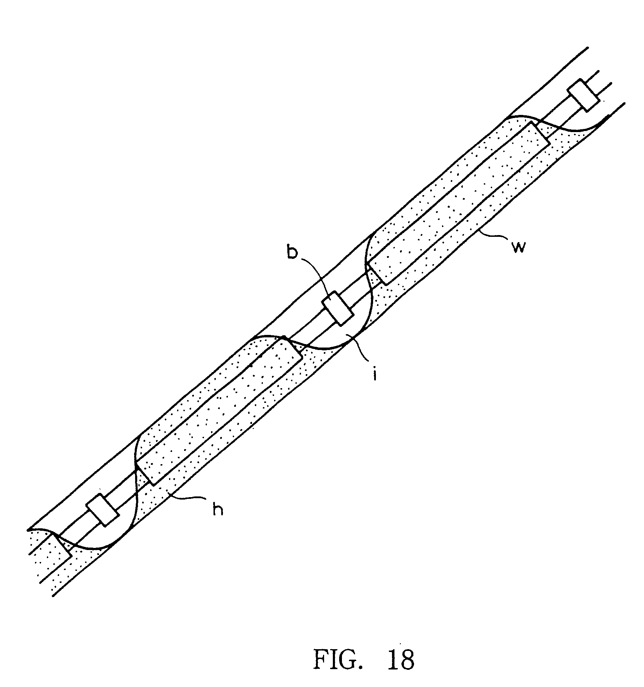

Gravel is normally packed most tightly in a location in an annulus between the screen and the wellbore where fluid carrying the gravel circulates through the screen. Therefore, gravel cannot be packed so tightly in an annulus about the blank portion as in an annulus about the screen portion. In a vertical wellbore, gravel can be packed to some degree about the blank portion due to gravity but, in a high angle wellbore, as shown in Fig. 18, gravel h moves toward the bottom side of a wellbore w due to gravity and cannot be packed in a space about a blank portion b, so that a space i which is not packed with gravel is generated in the vicinity of the blank portion b.

Gravel in the screen/wellbore annulus can then shift and slump after the well is put on production and this can form voids or unpacked annulus areas. Annulus areas where gravel is not tightly packed form paths for undesirable sand or solids from an unconsolidated sand formation to enter the wellbore and erode the screen, clog the screen openings, and/or to fill the inside of the wellbore with unwanted solids.

U.S. Patent No. 4,945,991, Jones, L.G., "Methods for Gravel Packing Wells" discloses a screen with substantially rectangular perforated shunt tubes attached to the outside of a screen longitudinally over the entire length of the screen, and connected between all sectional lengths of screens attached together to provide flow paths for the gravel-laden fluid to flow into and pack voids or unpacked areas of the screen/wellbore annulus. This device allows the gravel/fluid slurry to enter and flow through multiple flow paths near or above the screen and to thereafter flow both down the screen/wellbore annulus or down one or more of the appendaged perforated shunt tubes. Dehydration of the slurry in the perforated shunt tubes is inhibited by combination of limited area of perforations in the tubes and by the flow of gravel slurry down the screen/wellbore annulus, thus gravel slurry in the perforated shunt tubes is much less likely to be dehydrated and is most likely to flow continuously through the shunt tubes until it reaches the vicinity of a portion of the screen/wellbore annulus that is void of gravel or is not fully packed with gravel, then the gravel slurry in the perforated shunt tubes will flow into the inadequately gravel packed annulus.

A problem with U.S. Patent No. 4,945,991 is that it takes much time and labor to assemble this device at a well site and it is very troublesome to lower the device into the well. Further, it is very difficult to lift this device from the well-bore in the event that the device is caught in the well or because it requires repair. It is also a very troublesome work to connect respective adjacent shunt tubes while assembling the screeen and lowering it into the well. Furthermore, the blank portions at ends of each screen unit a has no screen through which fluid can flow during packing of gravel or after start of production in the well. Japanese Patent Application Laid-open No. Hei 6-313330 discloses a well screen including a slurry flow path in which, for eliminating the disadvantage of the above described United States patent, a plurality of gravel supply tubes are provided inside of a screen wire and slurry supply openings communicating these supply tubes with the outside of the screen are formed.

This device, however, has not solved the above described problem that it takes much time and labor to connect adjacent screen units and shunt tubes.

Japanese Patent Application No. 338870/1993 discloses a well screen which comprises support rods disposed in the circumferential direction of each connecting portion of a screen unit and extending in the axial direction of the screen unit and a wire wound about the outside surface of these support rods with slits of a predetermined width, with opening being formed in the connecting portion for permitting flow of fluid between the outside and inside of the screen unit. This well screen enables gravel to be packed efficiently over the entire range of the annulus of a well. In this well screen also, however, the problem of consumption of enormous time and labor in joining of adjacent screen units has remained unsettled.

US-A-3633674 describes an apparatus for inhibiting the entrance of loose formation materials into a well bore. That apparatus may comprise a tubular screen having an elongated and flexible tubular screen member in the shape of a coil.

US-A-2696264 discloses a well screen comprising an elongated perforated tube with openings at a predetermined interval and a tubular screen member.

It is, therefore, an object of the invention to provide a well screen capable of reducing time and labor for connecting screen units at a well site and lowering the connected screen units into a well.

It is another object of the invention to provide a well screen which will enable gravel to be packed efficiently in the entire range of an annulus between the screen and the well without consuming much time and labor for connecting adjacent screen units.

It is another object of the invention to provide a well screen having a structure which facilitates manufacturing of a well screen achieving the above described objects and a method for manufacturing such screen.

Other objects and features of the invention will become apparent from the description made below.

A well screen achieving the first object of the invention comprises an elongated and flexible tubular screen member, characterized in that the well screen is wound in the shape of a coil, as obtained by winding around a drum.

According to the invention, the well screen can be installed in a well by only unwinding the coiled screen continuously from the coil and lowering the unwound screen into the well. Troublesome work for connecting screen units together such as screwing of an end portion of a succeeding screen unit to an end portion of a preceding screen can be obviated so that work time for installing a well screen is remarkably saved. Besides, a rig which was indispensable for connecting adjacent screen units becomes unnecessary with resulting benefit of saving of costs for installing a well.

In one aspect of the invention, the tubular screen member comprises support means disposed cylindrically and extending in the axial direction of the screen, and wire means disposed on the outer periphery of the support means to form slits of a predetermined width.

In one aspect of the invention for achieving the first and second object of the invention, the support means comprise support rods disposed at a predetermined interval in the circumferential direction of the screen and extending in the axial direction of the screen over the entire length thereof and the wire means comprises a wire wound spirally on the outer periphery of the support rods.

According to this aspect of the invention, since there is no blank portion for connecting the screen units together in the screen, gravel can be packed most efficiently over the entire range of the annulus between the screen and wellbore.

In another aspect of the invention, the tubular screen member comprises a plurality of screen units each of which comprises support rods disposed at a predetermined interval in the circumferential direction of the screen and extending in the axial direction of the screen, a wire wound spirally on the outer periphery of the support rods to from slits of a predetermined width, and a pair of end rings to which ends of the support rods are fixed and adjacent ones of these screen units are connected together at the end rings.

In another aspect of the invention, the tubular screen member comprises a plurality of screen units each of which comprises a support rod wound spirally to form a predetermined pitch, wires arranged in parallel in the circumferential direction to form slits of a predetermined width and extending in the axial direction, and a pair of end rings to which ends of the support rod are fixed and adjacent ones of these screen units are connected together at the end rings.

In another aspect of the invention for achieving the first to third objects of the invention, the tubular screen member comprises a sheet in the form of a belt consisting of elongated support rods arranged in parallel at a predetermined interval and wires in the form of rods which are arranged in a direction crossing the support rods and welded to the support rods, said sheet being bent and rounded spirally in such a manner that one side edge of the sheet in the longitudinal direction of the sheet abuts against and is welded to the other side edge of the sheet.

According to this aspect of the invention, a coiled well screen of a large length can be produced by employing a relatively small screen production line without requiring a huge and long production line.

In another aspect of the invention, a coiled well screen achieving the first object of the invention comprises an elongated perforated tube formed with openings at a predetermined interval and a tubular screen member provided on the periphery thereof, characterized in that the perforated tube is flexible and the tubular screen member is wound in the shape of a coil as obtained by winding around a drum.

The tubular screen member may consist of a wire wound spirally on the outer periphery of the perforated tube to form slits of a predetermined width.

The elongated perforated tube may consist of a perforated metal sheet which is bent spirally in such a manner that a side edge of the metal sheet in the longitudinal direction abuts against and is welded to the other side edge of the metal sheet.

In one aspect of the invention, the tubular screen member comprises a sheet in the form of a belt consisting of elongated support rods arranged in parallel at a predetermined interval and wires in the form of rods which are arranged in a direction crossing the support rods and welded to the support rods, said sheet being wound spirally on the outer periphery of the perforated tube in such a manner that one side edge of the sheet in the longitudinal direction of the sheet abuts against and is welded to the other side edge of the sheet.

In another aspect of the invention, the metal sheet has projections extending in the longitudinal direction at a predetermined interval and the tubular screen member consists of wires in the form of rods which are arranged in a direction crossing the projections to form slits of a predetermined width and welded to these projections.

By forming the perforated tube and/or tubular screen member with a sheet in the form of a belt and bending and winding this sheet spirally and, when necessary, causing one side edge of the sheet in the longitudinal direction to abut against and to be welded to the other side edge of the sheet, a screen of any desired length can be manufactured by using only a relatively small production line.

In another aspect of the invention, the tubular screen member comprises wires arranged in parallel on the periphery of the perforated tube to form slits of a predetermined width and extending in the axial direction of the screen and a support rod wound at a predetermined pitch about the outer periphery of the wires.

Preferred embodiments will be described below with reference to the accompanying drawings.

In the accompanying drawings,
Fig. 1 is a perspective view showing an embodiment of a coiled well screen according to the invention;
Fig. 2 is a partial sectional view of the same embodiment;
Fig. 3 is a partial sectional view of another embodiment of the invention;
Figs. 4A and 4B are views showing another embodiment of the invention in which Fig. 4A is a front view and Fig. 4B is a side view;
Fig. 5 is a perspective view showing a sheet in the form of a belt used in another embodiment of the invention;
Fig. 6 is a perspective view showing a tubular screen member used in the same embodiment;
Fig. 7 is a perspective view showing a method for producing the sheet of the same embodiment;
Figs. 8A and 8B are views showing another embodiment of the invention in which Fig. 8A is a side view and Fig. 8B is a front view;
Figs. 9A and 9B are views showing another embodiment of the invention in which Fig. 9A is a front view and Fig. 9B is a side view;
Fig. 10 is a partial sectional view showing another embodiment of the invention;
Fig. 11 is a partial sectional view showing another embodiment of the invention;
Fig. 12 is a diagram schematically showing a method for producing the screen of Fig. 10;
Fig. 13 is a diagram schematically showing a method for producing another embodiment of the well screen;
Fig. 14 is a perspective view schematically showing a method for producing a perforated tube used in another embodiment of the well screen;
Fig. 15 is a perspective view schematically showing a method for producing the embodiment of Fig. 14;
Fig. 16 is a perspective view showing another embodiment of the invention;
Fig. 17 is a view showing a conventional well screen; and
Fig. 18 is a view showing a state of packing of gravel arising in the case where the conventional well screen is used.

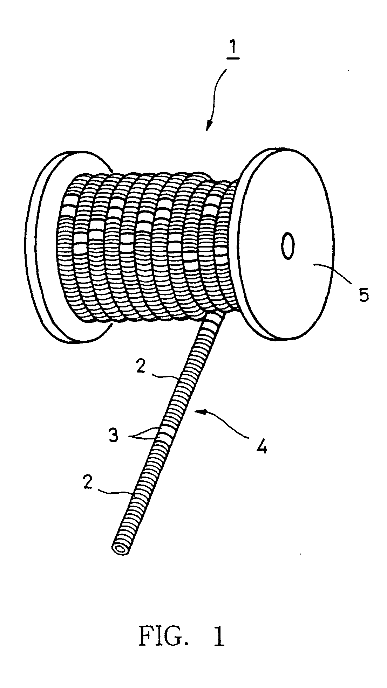

Fig. 1 shows a perspective view schematically showing the basic concept of the coiled well screen according to the invention.

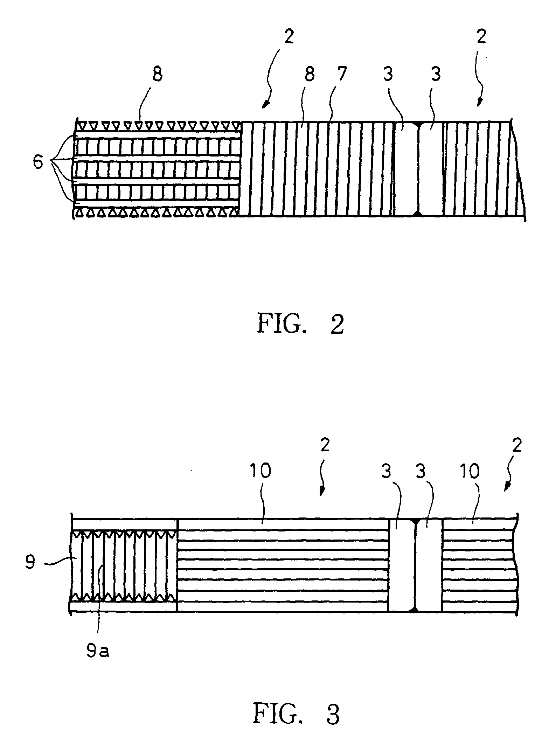

In the embodiment of Fig. 1, a coiled screen 1 is made of screen units 2 of a necessary number which are made of flexible materials such as steel rods and wire and, as shown in the partial sectional view of Fig. 2, are welded to adjacent screen units at end rings 3. The screen units 2 thus connected together constitute an elongated tubular screen member 4 which is wound in the shape of a coil about a drum 5.

Each screen unit 2 includes, as shown in Fig. 2, support rods 6 extending in the axial direction of the screen unit 2 and arranged cylindrically in the circumferential direction at a predetermined interval, a wedge wire 8 wound about the outer periphery of the support rods 6 to form a spiral slit 7 of a predetermined width and a pair of end rings 3 provided at either end of the screen unit 2 to which ends of the support rods 6 are fixed. The screen units 2 of a necessary number are prepared and one screen unit 2 and a succeeding screen unit 2 are welded together at the adjacent end rings 3 to form an integral tubular screen. Thus, all of the required screen units 2 are successively connected in series and a completed portion of the screen is successively wound on the drum 5 to form the coiled screen 1 wound on the drum 5.

It is necessary for each screen unit 2 to be flexible and elastically deformable to the extent that it can be wound on the drum 5. The materials and size of the support rods 6 and the wire 8 are selected in accordance with such requirements. As the materials of the support rods 6 and the wire 8, carbon steel, stainless steel and nickel steel, for example, are suitable in their flexibility and strength.

Fig. 3 shows another embodiment of the invention. In this and subsequent embodiments, the same component parts as those of Figs. 1 and 2 are designated by the same reference characters and detailed description will be omitted.

In the embodiment shown in Fig. 3, each screen unit 2 includes a support rod 9 which is wound spirally to form a predetermined pitch, axially extending wires 10 which are arranged in the circumferential direction in parallel to one another on the outer periphery of the support rod 9 to form slits of a predetermined width. These screen units 2 are welded together at end rings 3, and a completed portion of such screen units 2 are successively wound on a drum 5 in the same manner as in the embodiment of Fig. 2 to form a coiled screen wound on the drum 5.

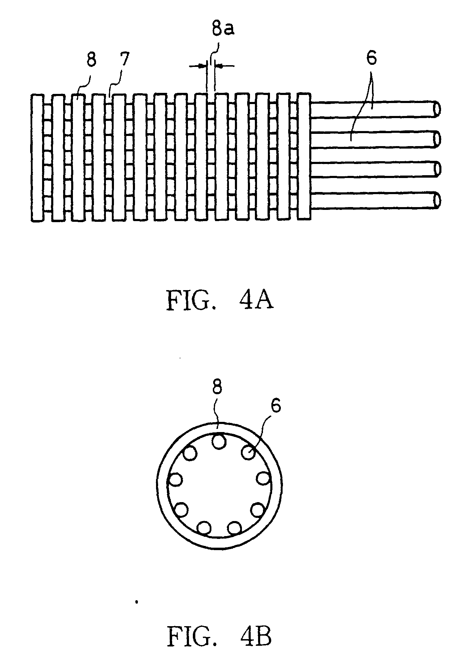

Fig. 4A is a front view of another embodiment of the invention and Fig. 4B is a side view of the same embodiment.

This embodiment is suitable for a coiled well screen of a relatively small entire length. This screen is made of cylindrically arranged support rods 6 which are continuous and jointless over the entire length of the coiled screen and of a wire 8 wound on the outer periphery of the support rods 6 to form a spiral slit 8a. This embodiment is different from the embodiment of Figs. 1, 2 and 3 in that it has no blank portion in the form of the end rings 3 where welding is necessary. This embodiment therefore has the benefit that, when it has been installed in a well, gravel can be packed efficiently over the entire annulus between the screen and the wellbore. In this embodiment, however, it is not possible to wind this screen up on the drum 5 successively upon completion of welding of one screen unit 2 to another as in the embodiments of Figs. 1 to 3. Instead, it requires a long production site in the manufacturing plant. For example, support rods 6 having length of several tens of meters are held at their starting end by a holding chuck slidably disposed in the production site and the wire 8 is wound about these support rods 6 and welded to the support rods 6 at a stationary welding station while the support rods 6 are rotated about the axis of the screen and are pulled and moved by the holding chuck which slides in the production site. After completing welding of the wire 8 on the support rods 6 for a certain length, the holding chuck is released and moved back to the start point to hold the support rods 6 near a start point of next welding. Then, the welding work is resumed while the holding chuck pulls the support rods 6. During this subsequent welding work, it is necessary to support self-rotating end portions of the support rods 6 in which the welding of the wire 8 has been completed. In this manner, it is possible to manufacture a screen of several tens of meters. In a case where it is necessary to produce a screen having the entire length of several hundreds of meters or several thousands of meters, it is practically impossible to provide a jig which extends to such a length. In producing a screen having such a large length, therefore, it will be more practical to employ the method of manufacturing according to which, as shown in Figs. 1 to 3, the screen units 2 are connected successively and wound successively on the drum upon connecting.

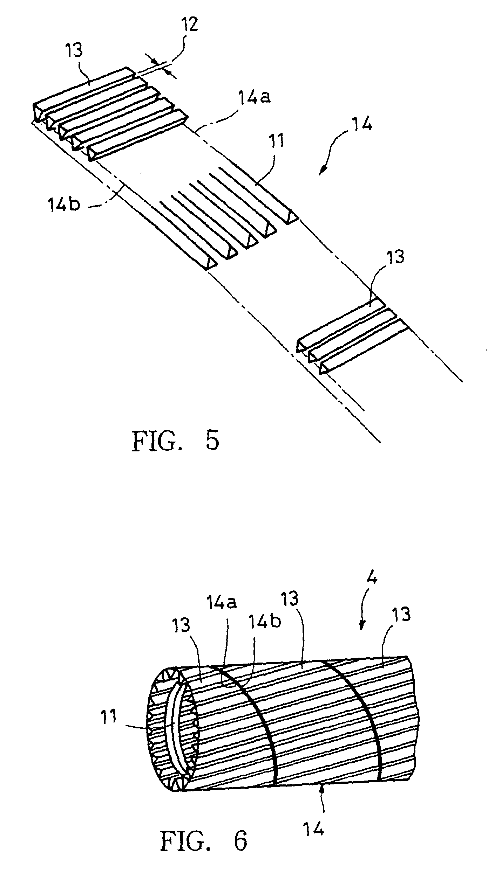

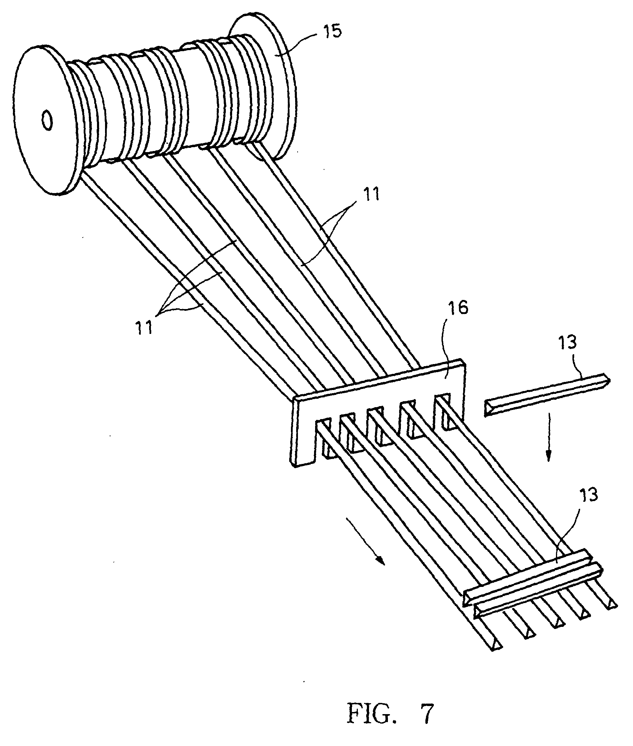

Figs. 5 to 7 show another embodiment of the invention. Fig. 5 is a perspective view showing a belt-like sheet consisting of support rods and wires, Fig. 6 is a perspective view showing a tubular screen member formed by bending this belt-like sheet spirally, and Fig. 7 is a perspective view showing the manner of producing the belt-like sheet.

In this embodiment, a tubular screen member 4 consists of a belt-like sheet 14 which includes elongated support rods 11 arranged in parallel at a predetermined interval and rod-like wires 13 which are arranged in a direction crossing the support rods 11 to form slits 12 of a predetermined width and welded to these support rods 11. This belt-like sheet 14 is bent and rounded spirally in such a manner that one side edge 14a of the sheet 14 in the longitudinal direction abuts against and is welded to the other side edge 14b of the sheet 14.

For manufacturing the sheet 14, as shown in Fig. 7 for example, wedge wires to form support rods 11 are unwound from a drum 15 and these wedge wires are adjusted in their interval by a combing member 16 to a predetermined interval. Rod-like wedge wire to form wires 13 are placed one by one on the sliding support rods 11 at a predetermined interval so that the projecting portion of each rod-like wire 13 abuts against the projecting portion of each support rod 11 and the support rods 11 and the rod-like wires 13 are welded together at their abutting points. The belt-like sheet thus completed is wound on a drum (not shown) in the form of a coil.

In this embodiment, a coiled screen can be produced by unwinding the belt-like sheet 14 consisting of the support rods 11 and the wires 13 from a drum and bending and rounding this belt-like sheet 14 spirally to form the tubular screen member 4 by abutting and welding the side edge 14a with the side edge 14b and finally winding this tubular screen member 4 on a drum. Therefore, a long production line equivalent to the entire length of this screen is not required but a screen of any desired length can be produced by employing a relatively small screen production line. Moreover, since the coiled screen produced continuously in this manner has no blank tubular portion for welding adjacent screen units, gravel can be packed efficiently over the entire length of the annulus between the screen and the wellbore.

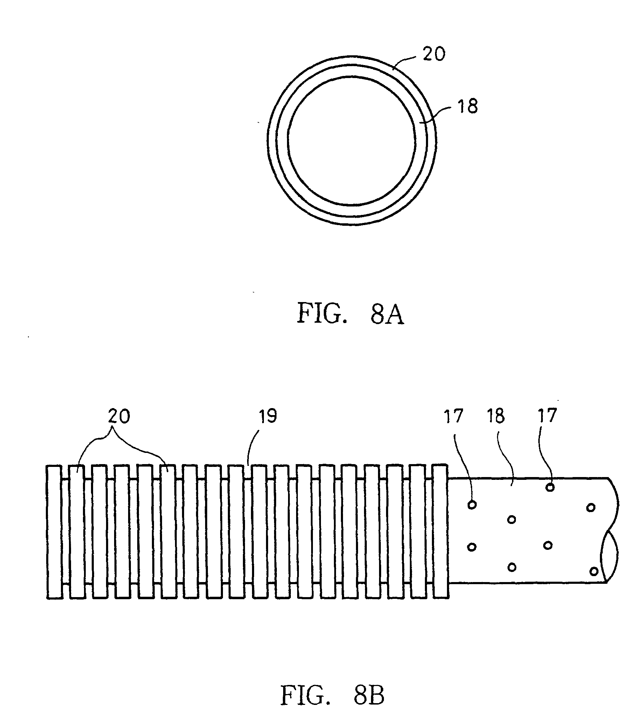

Fig. 8A is a side view of another embodiment of the invention and Fig. 8B is a front view thereof.

In this embodiment, a coiled well screen includes an elongated and flexible perforated tube 18 made of carbon steel or the like material and formed with openings 17 at a predetermined interval and a wire 20 wound on the outer periphery of the perforated tube 18 to form a spiral slit 19 of a predetermined width.

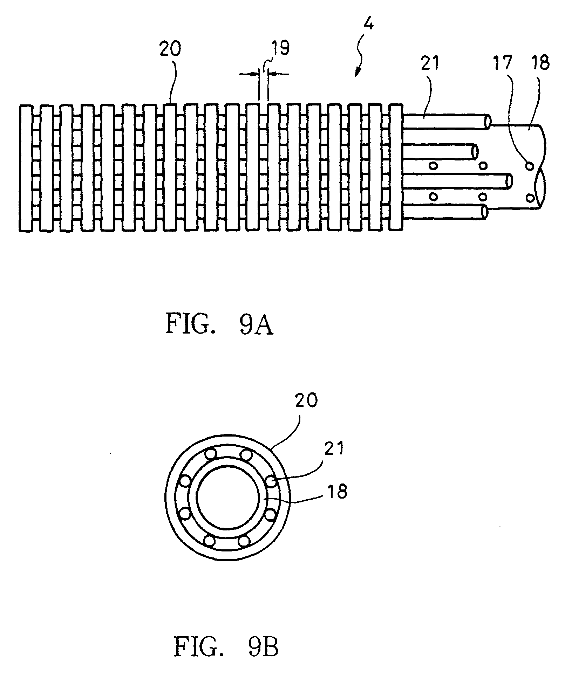

Fig. 9A is a front view of another embodiment of the invention and Fig. 9B is a side view thereof.

In this embodiment, a coiled well screen includes an elongated perforated tube 18 similar to the tube 18 of Figs. 8A and 8B formed with openings 17, support rods 21 arranged on the outer periphery of the perforated tube 18 at a predetermined interval in the circumferential direction and extending in the axial direction, and a wire 20 wound spirally on the outer periphery of the support rods 21 to form a spiral slit 19 of a predetermined width. These support rods 21 and the wire 20 constitute a tubular flexible member 4.

Conversely to the embodiment of Figs. 9A and 9B, a tubular flexible member 4 may be made of a support rod wound spirally at a predetermined pitch and axially extending wires arranged on the outer periphery of the spiral support rod at a predetermined interval in the circumferential direction.

Since the coiled well screens of Figs.8A,8B,9A and 9B are made by covering a continuous and jointless tubular screen member on a perforated tube, these screens have the advantage that there are no blank tube portion in the screen but, on the other hand, in production, the elongated perforated tube 18 which is of the same length as the entire length of the screen must be linearly disposed in the same manner as the embodiment of Figs.4A and 4B so that this screen is suitable for a coiled well screen of a relatively small length.

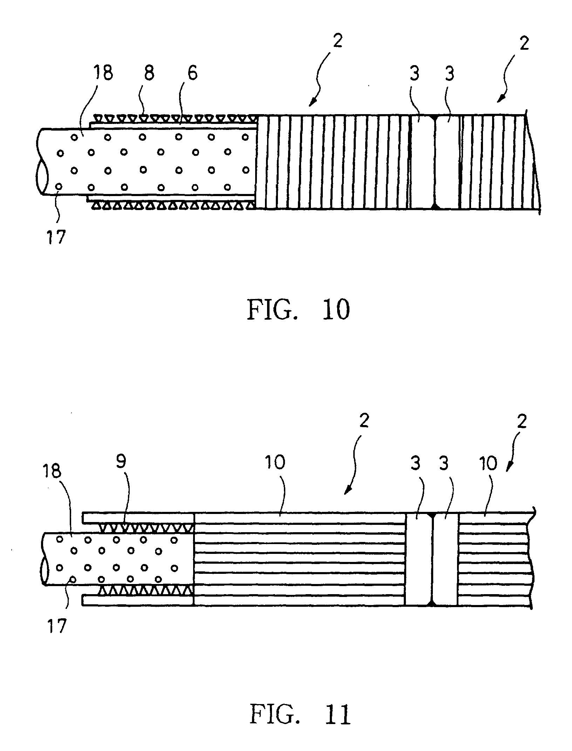

Fig. 10 shows another embodiment of the invention.

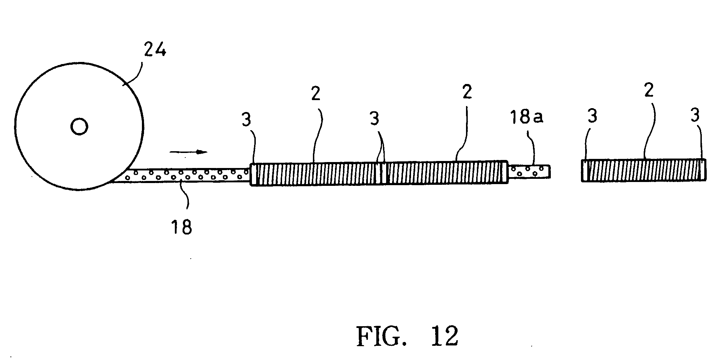

In this embodiment, a coiled well screen includes, as in the embodiments of Figs. 8A,8B,9A and 9B, an elongated perforated tube 18 formed with openings 17 and screen units 2 of the same structure as the screen unit 2 of Fig. 2 fitted on the perforated tube 18. The screen units 2 are welded together at adjacent end rings 3. For producing this screen, as shown in Fig. 12, the perforated tube 18 is unwound from a drum 24, the screen units 2 are successively fitted on the perforated tube 18 and the adjacent end rings 3 of the screen units 2 are welded together.

Fig. 11 shows another embodiment of the invention.

In this embodiment, a coiled well screen includes an elongated perforated tube 18 of the same structure as the perforated tube 18 of Fig. 10 and screen units 2 of the same structure as the screen unit 2 of Fig. 3 fitted on the perforated tube 18. Adjacent end rings of the screen units 2 are welded together.

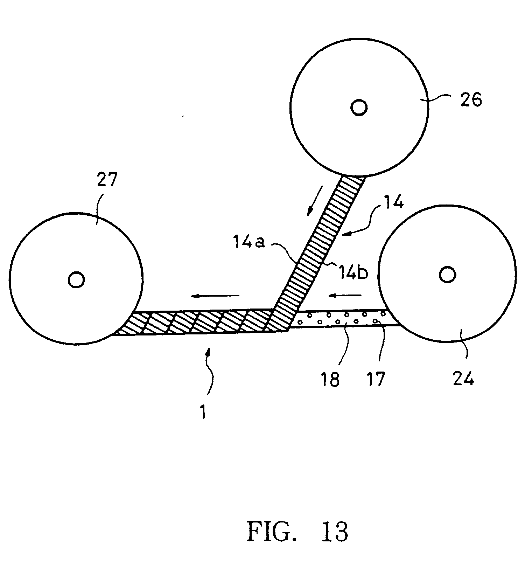

Fig. 13 schematically shows a method for manufacturing another embodiment of the coiled well screen according to the invention.

In this embodiment, a coiled well screen is produced by unwinding an elongated perforated tube 18 formed with openings 17 and wound on a drum 24 and spirally winding on the outer periphery of the perforated tube 18 a belt-like sheet 14 of the same structure as the belt-like sheet 14 of Fig. 5 unwound from a drum 26. If necessary, the side edge 14a of the belt-like sheet 14 may be welded to the side edge 14b thereof. The well screen 1 thus formed is wound on a drum 27.

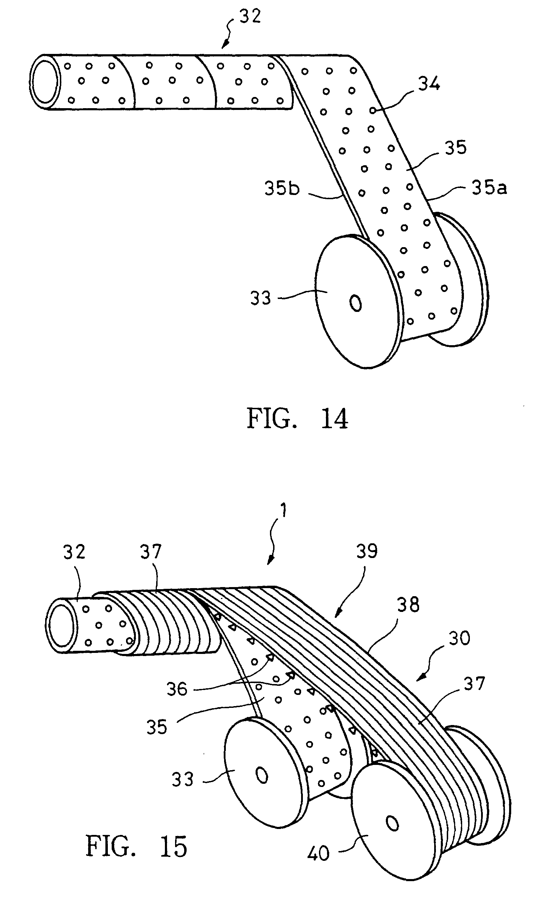

Figs. 14 and 15 show another embodiment of the invention. Fig. 14 is a perspective view showing a method for producing a perforated tube only and Fig. 15 is a perspective view showing a method for producing a coiled well screen. In this embodiment, an elongated perforated tube 32 on which a tubular screen member 30 is wound is made, as shown in Fig. 14, by unwinding a belt-like metal plate 35 made of, e.g., carbon steel and formed with openings 34 from a drum 33 and winding this metal plate 35 spirally in such a manner that one side edge 35a in the longitudinal direction abuts against and is welded to the other side edge 35b.

The tubular screen member 30 consists of a belt-like sheet 39 which is made, as shown in Fig. 15, of support rods 36 arranged in parallel at a predetermined interval and elongated wires 38 arranged in a direction crossing the support rods 36 to form slits 37 of a predetermined width and welded to these support rods 36. The screen is composed of the perforated tube 32 and the belt-like sheet 39 wound spirally on the outer periphery of the perforated tube 32.

For producing this screen 1, as shown in Fig. 15, the belt-like metal plate 35 wound on the drum 33 is unwound and bent spirally so that the both side edges abut each other and are welded together and the perforated tube 32 is thereby formed. In the meanwhile, the belt-like sheet 39 is unwound from the drum 40 and wound spirally on the outer periphery of the just formed perforated tube 32 with some delay from forming of the perforated tube 32. Thus the tubular screen member 30 is formed. If necessary, one side edge of the tubular screen member 30 may be welded to the other side edge thereof.

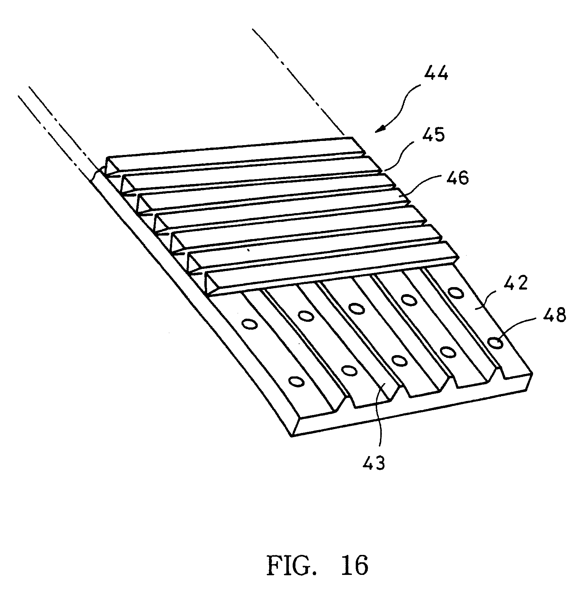

Fig. 16 is a perspective view showing another embodiment of the invention.

In this embodiment, a belt-like metal plate 42 constituting a perforated tube is formed with openings 48 and also with projections 43 arranged at a predetermined interval and extending in the longitudinal direction. A tubular screen member 44 consists of rod-like wires 46 arranged in a direction crossing these projections 43 to form slits 45 of a predetermined width and welded to these projections 43.

A coiled well screen can be produced by bending this belt-like metal plate 42 spirally in such a manner that one side edge thereof abuts against and is welded to the other side edge thereof and winding the formed screen on a drum (not shown).

According to this embodiment, since the projections 43 can be formed simultaneously with forming of the openings 48 in the forming process of the belt-like metal plate 42, support rods of a tubular screen member can be omitted and the manufacturing process thereby can be curtailed. Besides, a very strong screen structure can be obtained.

In the embodiment of Fig. 13, the belt-like sheet 14 is made by arranging the rod-like wires 13 on the elongated support rods 11. The belt-like sheet 14 is not limited to this structure. For example, a belt-like sheet may be made by arranging short support rods in parallel at a predetermined interval and arranging elongated wires in a direction crossing these support rods and welding the wires with the support rods at their crossing points.

As materials of the tubular screen member used for the coiled well screen according to the invention, materials other than those described above may be used. For example, a multi-layer composite screen as disclosed in European Patent Application No. 94 100 134.9 may be used for this purpose. This screen includes filters of a plurality of layers superposed one upon another, each filter of said plurality of layers comprising wires of a substantially triangular or trapezoidal cross section arranged in parallel to one another with a continuous slit of a substantially V-shaped cross section widening increasingly inwardly from the surface of the screen being formed between respective adjacent wires, the wires of one filter of the respective adjacent filters crossing the wires of the other filter and the respective adjacent filters are fixed to each other at crossing points of the wires of the respective filters.

The belt-like sheet is not limited to a slit wire screen but other screen member such as an expanded metal sheet, slitted metal sheet and meshed-wire may be also be used for the belt-like sheet.

## Claims

1. A coiled well screen comprising an elongated and flexible tubular screen member, **characterized in that** the well screen (1) is wound in the shape of a coil, as would be obtained by winding around a drum (5).

2. A well screen according to claim 1, wherein the tubular screen member (4) comprises support means (6) disposed cylindrically and extending in the axial direction of the screen (1), and wire means (8) disposed on the outer periphery of the support means (6) to form slits (12) of a predetermined width.

3. A well screen according to claim 1 or 2, wherein the support means comprise support rods (6) disposed at predetermined intervals in the circumferential direction of the screen (1) and extending in the axial direction of the screen over the entire length thereof, and the wire means comprises a wire (8) wound spirally on the outer periphery of the support rods (6).

4. A well screen according to any of claims 1 to 3, wherein the tubular screen member comprises a plurality of screen units (2) each of which comprises support rods (6) disposed at a predetermined interval in the circumferential direction of the screen and extending in the axial direction of the screen (1), a wire (8) wound spirally on the outer periphery of the support rods (6) to form a slit (12) of a predetermined width, and a pair of end rings (3) to which ends of the support rods (6) are fixed and adjacent ones of these screen units (2) are connected together at the end rings (3).

5. A well screen according to any of claims 1 to 4, wherein the support means comprises a support rod (9) wound spirally to form a predetermined pitch over the entire length of the screen (1), and the wire means comprises wires (10) arranged in parallel in the circumferential direction to form slits of a predetermined width and extending in the axial direction.

6. A well screen according to any of claims 1 to 5, wherein the tubular screen member comprises a plurality of screen units (2) each of which comprises a support rod wound spirally to form a predetermined pitch, wires arranged in parallel in the circumferential direction to form slits of a predetermined width and extending in the axial direction, and a pair of end rings (3) to which ends of the support rod are fixed and adjacent ones of these screen units (2) are connected together at the end rings (3).

7. A well screen according to any of claims 1 to 6, wherein the tubular screen member comprises a sheet (14) in the form of a belt consisting of elongated support rods (11) arranged in parallel at a predetermined interval and wires (13) in the form of rods which are arranged in a direction crossing the support rods and welded to the support rods (11), said sheet (14) being bent and rounded spirally in such a manner that one side edge (14a) of the sheet (14) in the longitudinal direction of the sheet (14) abuts against and is welded to the other side edge (14b) of the sheet (14).

8. A coiled well screen comprising an elongated perforated tube formed with openings at a predetermined interval and a tubular screen member provided on the periphery thereof, **characterized in that** the perforated tube (18) is flexible and the tubular screen member (4) is wound in the shape of a coil, as would be obtained by winding around a drum.

9. A well screen according to claim 8, wherein the tubular screen member (4) consists of a wire (20) wound spirally on the outer periphery of the perforated tube (18) to form a slit (19) of a predetermined width.

10. A well screen according to claim 8 or 9, wherein the tubular screen member (4) comprises support means (21) disposed cylindrically and extending in the axial direction of the screen (1), and wire means (20), disposed on the outer periphery of the support means (21) to form slits of a predetermined width.

11. A well screen according to any of claims 8 to 10, wherein the support means comprise support rods (21) disposed at a predetermined interval in the circumferential direction of the screen and extending in the axial direction of the screen over the entire length thereof and the wire means comprises a wire (20) wound spirally on the outer periphery of the support rods (21).

12. A well screen according to claim 10, wherein the support means comprises a support rod wound spirally to form a predetermined pitch over the entire length of the screen and the wire means comprises wires arranged in parallel in the circumferential direction to form slits of a predetermined width and extending in the axial direction.

13. A well screen according to any of claims 10 to 12, wherein the tubular screen member comprises a plurality of screen units (2) each of which comprises support rods (6) disposed at a predetermined interval in the circumferential direction of the screen and extending in the axial direction of the screen, a wire (8) wound spirally on the outer periphery of the support rods (6) to form a slit of a predetermined width, and a pair of end rings (3) to which ends of the support rods (6) are fixed and adjacent ones of these screen units (2) are connected together at the end rings (3).

14. A well screen according to any of claims 10 to 13, wherein the tubular screen member comprises a plurality of screen units (2) each of which comprises a support rod wound spirally to form a predetermined pitch, wires arranged in parallel in the circumferential direction to form slits of a predetermined width and extending in the axial direction, and a pair of end rings (3) to which ends of the support rod are fixed and adjacent ones of these screen units (2) are connected together at the end rings (3).

15. A well screen according to any of claims 10 to 14, wherein the tubular screen member comprises a sheet (14) in the form of a belt consisting of elongated support rods arranged in parallel at a predetermined interval and wires in the form of rods which are arranged in a direction crossing the support rods and welded to the support rods, said sheet (14) being wound spirally on the outer periphery of the perforated tube (18) in such a manner that one side edge (14a) of the sheet (14) in the longitudinal direction of the sheet (14) abuts against and is welded to the other side edge (14b) of the sheet (14).

16. A well screen (1) according to any of claims 8 to 15, wherein the elongated perforated tube consists of a perforated metal sheet (35) which is bent spirally in such a manner that a side edge (35a) of the metal sheet (35) in the longitudinal direction abuts against and is welded to the other side edge (35b) of the metal sheet (35).

17. A well screen (1) according to any of claims 10 to 16, wherein the tubular screen member comprises a sheet (35) in the form of a belt consisting of elongated support rods (36) arranged in parallel at a predetermined interval and elongated wires (38) which are arranged in a direction crossing the support rods (36) and welded to the support rods (36), said sheet (35) being bent and rounded spirally in such a manner that one side edge (35a) of the sheet (35) in the longitudinal direction of the sheet (35) abuts against and is welded to the other side edge (35b) of the sheet (35).

18. A well screen according to claim 16 or 17, wherein the tubular screen member comprises a sheet (35) in the form of a belt consisting of elongated support rods (36) arranged in parallel at a predetermined interval and wires (38) which are arranged in a direction crossing the support rods (36) and welded to the support rods (36), said sheet (35) being wound spirally on the outer periphery of the perforated tube (32) in such a manner that one side edge (35a) of the sheet (35) in the longitudinal direction of the sheet (35) abuts against and is welded to the other side edge (35b) of the sheet (35).

19. A well screen according to any of claims 16 to 18, wherein the tubular screen member comprises a sheet (35) in the form of a belt consisting of elongated support rods (36) arranged in parallel at a predetermined interval and wires (38) in the form of rods which are arranged in a direction crossing the support rods (36) and welded to the support rods (36), said sheet (35) being wound spirally on the outer periphery of the perforated tube (32) in such a manner that one side edge (35a) of the sheet (35) in the longitudinal direction of the sheet (35) abuts against and is welded to the other side edge (35b) of the sheet (35).

20. A well screen according to any of claims 16 to 19, wherein the metal sheet (42) has projections (43) extending in the longitudinal direction at a predetermined interval and the tubular screen member consists of wires (46) in the form of rods which are arranged in a direction crossing the projections to form slits (45) of a predetermined width and welded to these projections (43).

21. A well screen according to any of claims 8 to 20, wherein the tubular screen member comprises wires arranged in parallel on the periphery of the perforated tube to form slits of a predetermined width and extending in the axial direction of the screen and a support rod wound at a predetermined pitch about the outer periphery of the wires.

## Patentansprüche

1. Gewickeltes Bohrlochsieb mit einem länglichen und flexiblen rohrförmigen Siebelement, **dadurch gekennzeichnet, daß** das Bohrlochsieb (1) in Form einer Wicklung aufgewickelt ist, wie man sie durch Aufwickeln auf eine Trommel (5) erhalten würde.

2. Bohrlochsieb nach Anspruch 1, worin das rohrförmige Siebelement (4) einen Träger (6) aufweist, der zylindrisch angeordnet ist und sich in axialer Richtung des Siebs (1) erstreckt, sowie mit einer Drahtvorrichtung (8) versehen ist, die sich am Außenumfang des Trägers (6) befindet, um Schlitze (12) mit einer vorgegebenen Breite zu bilden.

3. Bohrlochsieb nach Anspruch 1 oder 2, worin der Träger Trägerstäbe (6) aufweist, die mit vorgegebenen Zwischenräumen in Umfangsrichtung des Siebs (1) angeordnet sind und sich in axialer Richtung des Siebs über dessen gesamte Länge erstrecken, und die Drahtvorrichtung mit einem Draht (8) versehen ist, der spiralförmig auf dem Außenumfang der Trägerstäbe (6) aufgewickelt ist.

4. Bohrlochsieb nach einem der Ansprüche 1 bis 3, worin das rohrförmige Siebelement eine Mehrzahl von Siebeinheiten (2), von denen jede mit Trägerstäben (6) versehen ist, die mit einem vorgegebenen Zwischenraum in Umfangsrichtung des Siebs angeordnet sind und sich in axialer Richtung des Siebs (1) erstrecken, einen Draht (8), der spiralförmig auf dem Außenumfang der Trägerstäbe (6) aufgewickelt ist, um einen Spalt (12) mit einer vorgegebenen Breite zu bilden, und ein Paar Endringe (3), an welche Enden der Trägerstäbe (6) befestigt sind, aufweist, wobei benachbarte Siebeinheiten (2) an den Endringen (3) miteinander verbunden sind.

5. Bohrlochsieb nach einem der Ansprüche 1 bis 4, worin der Träger einen Trägerstab (9) aufweist, der spiralförmig aufgewickelt ist, um über die Gesamtlänge des Siebs (1) eine vorgegebene Steigung auszubilden, und die Drahtvorrichtung mit Drähten (10) ausgerüstet ist, die in Umfangsrichtung parallel angeordnet sind, um Schlitze mit einer vorgegebenen Breite zu bilden, und sich in axialer Richtung erstrecken.

6. Bohrlochsieb nach einem der Ansprüche 1 bis 5, worin das rohrförmige Siebelement eine Mehrzahl von Siebeinheiten (2), von denen jede einen Trägerstab beinhaltet, der spiralförmig aufgewickelt ist, um eine vorgegebene Steigung auszubilden, und Drähte, die in Umfangsrichtung parallel angeordnet sind, um Schlitze mit einer vorgegebenen Breite zu bilden, und sich in axialer Richtung erstrecken, sowie ein Paar Endringe (3), an denen Enden des Trägerstabs befestigt sind, aufweist, und benachbarte Siebeinheiten (2) an den Endringen (3) miteinander verbunden sind.

7. Bohrlochsieb nach einem der Ansprüche 1 bis 6, worin das rohrförmige Siebelement eine Platte (14) in Form eines Riemens, der aus länglichen Trägerstäben (11) besteht, welche mit einem vorgegebenen Zwischenraum parallel angeordnet sind, und Drähte (13) in Form von Stäben, die in einer Richtung angeordnet sind, welche die Trägerstäbe kreuzt, und die an die Trägerstäbe (11) angeschweißt sind, wobei die Platte (14) gebogen und in einer solchen Weise spiralförmig rund ausgebildet ist, daß eine Seitenkante (14a) der Platte (14) in Längsrichtung der Platte (14) an der anderen Seitenkante (14b) der Platte (14) anstößt und daran angeschweißt ist.

8. Gewickeltes Bohrlochsieb mit einem länglichen perforierten Rohr, das mit Öffnungen in einem vorgegebenen Abstand ausgebildet ist, und mit einem rohrförmigen Siebelement an seinem Umfang, **dadurch gekennzeichnet, daß** das perforierte Rohr (18) flexibel ist und das rohrförmige Siebelement (4) in Form einer Wicklung aufgewickelt ist, wie man sie durch Aufwickeln auf eine Trommel erhalten würde.

9. Bohrlochsieb nach Anspruch 8, worin das rohrförmige Siebelement (4) aus einem Draht (20) besteht, der am Außenumfang des perforierten Rohrs (18) spiralförmig aufgewickelt ist, um einen Schlitz (19) mit einer vorgegebenen Breite zu bilden.

10. Bohrlochsieb nach Anspruch 8 oder 9, worin das rohrförmige Siebelement (4) einen Träger (21), der zylindrisch angeordnet ist und sich in axialer Richtung des Siebs (1) erstreckt, und eine Drahtvorrichtung (20), die sich am Außenumfang des Trägers (21) befindet, um Schlitze mit einer vorgegebenen Breite zu bilden, aufweist.

11. Bohrlochsieb nach einem der Ansprüche 8 bis 10, worin der Träger Trägerstäbe (21) aufweist, die mit einem vorgegebenen Zwischenraum in der Umfangsrichtung des Siebs angeordnet sind und sich in axialer Richtung des Siebs über dessen gesamte Länge erstrecken, und die Drahtvorrichtung mit einem Draht (20) versehen ist, der spiralförmig am Außenumfang der Trägerstäbe (21) aufgewickelt ist.

12. Bohrlochsieb nach Anspruch 10, worin der Träger einen Trägerstab aufweist, der spiralförmig aufgewickelt ist, um über die gesamte Länge des Siebs eine vorgegebene Steigung auszubilden, und die Drahtvorrichtung Drähte enthält, die in der Umfangsrichtung parallel angeordnet sind, um Schlitze mit einer vorgegebenen Breite zu bilden, und sich in axialer Richtung erstrecken.

13. Bohrlochsieb nach einem der Ansprüche 10 bis 12, worin das rohrförmige Siebelement eine Mehrzahl von Siebeinheiten (2), von denen jede mit Trägerstäben (6) ausgerüstet ist, die mit einem vorgegebenen Zwischenraum in der Umfangsrichtung des Siebs angeordnet sind und sich in axialer Richtung des Siebs erstrecken, einen Draht (8), der am Außenumfang der Trägerstäbe (6) spiralförmig aufgewickelt ist, um einen Schlitz mit einer vorgegebenen Breite zu bilden, und ein Paar Endringe (3), an welche Enden der Trägerstäbe (6) befestigt sind, wobei benachbarte Siebeinheiten (2) an den Endringen (3) miteinander verbunden sind, aufweist.

14. Bohrlochsieb nach einem der Ansprüche 10 bis 13, worin das rohrförmige Siebelement eine Mehrzahl von Siebeinheiten (2), von denen jede mit einem Trägerstab versehen ist, der spiralförmig aufgewickelt ist, um eine vorgegebene Steigung auszubilden, und Drähte, die in Umfangsrichtung parallel angeordnet sind, um Schlitze mit einer vorgegebenen Breite zu bilden, und sich in der axialen Richtung erstrecken, sowie ein Paar Endringe (3), an denen Enden des Trägerstabs fixiert sind, aufweist, wobei benachbarte Siebeinheiten (2) an den Endringen (3) miteinander verbunden sind.

15. Bohrlochsieb nach einem der Ansprüche 10 bis 14, worin das rohrförmige Siebelement eine Platte (14) in Form eines Riemens aufweist, der aus länglichen Trägerstäben, die mit einem vorgegebenen Zwischenraum parallel angeordnet sind, und Drähten in Form von Stäben, die in einer Richtung, welche die Trägerstäbe kreuzt, angeordnet und an die Trägerstäbe angeschweißt sind, besteht, wobei die Platte (14) am Außenumfang des perforierten Rohrs (18) derart spiralförmig aufgewickelt ist, daß eine Seitenkante (14a) der Platte (14) in Längsrichtung der Platte (14) an der anderen Seitenkante (14b) der Platte (14) anliegt und damit verschweißt ist.

16. Bohrlochsieb (1) nach einem der Ansprüche 8 bis 15, worin das längliche perforierte Rohr aus einer perforierten Metallplatte (35) besteht, die in einer solchen Weise spiralförmig gekrümmt ist, daß eine Seitenkante (35a) der Metallplatte (35) in der Längsrichtung an der anderen Seitenkante (35b) der Metallplatte (35) anliegt und damit verschweißt ist.

17. Bohrlochsieb (1) nach einem der Ansprüche 10 bis 16, worin das rohrförmige Siebelement eine Platte (35) in Form eines Riemens aufweist, der aus länglichen Trägerstäben (36), die mit einem vorgegebenen Zwischenraum parallel angeordnet sind, und längliche Drähte (38), die in einer Richtung angeordnet sind, welche die Trägerstäbe (36) kreuzt, und an die Trägerstäbe (36) angeschweißt sind, aufweist, wobei die Platte (35) gebogen und in einer solchen Weise spiralförmig rund ausgebildet ist, daß eine Seitenkante (35a) der Platte (35) in Längsrichtung der Platte (35) an der anderen Seitenkante (35b) der Platte (35) anliegt und damit verschweißt ist.

18. Bohrlochsieb nach einem der Ansprüche 16 oder 17, worin das rohrförmige Siebelement eine Platte (35) in Form eines Riemens aufweist, der aus länglichen Trägerstäben (36), die mit einem vorgegebenen Zwischenraum parallel angeordnet sind, und Drähten (38), die in einer Richtung angeordnet sind, welche die Trägerstäbe (36) kreuzt, und an den Trägerstäben (36) angeschweißt sind, besteht, wobei die Platte (35) am Außenumfang des perforierten Rohrs (32) in einer solchen Weise spiralförmig gewickelt ist, daß eine Seitenkante (35a) der Platte (35) in der Längsrichtung der Platte (35) an der anderen Seitenkante (35b) der Platte (35) anliegt und damit verschweißt ist.

19. Bohrlochsieb nach einem der Ansprüche 16 bis 18, worin das rohrförmige Siebelement eine Platte (35) in Form eines Riemens aufweist, der aus länglichen Trägerstäben (36), die mit einem vorgegebenen Zwischenraum parallel angeordnet sind, und Drähten (38) in Form von Stäben, die in einer Richtung angeordnet sind, welche die Trägerstäbe (36) kreuzt, und an den Trägerstäben (36) angeschweißt sind, besteht, wobei die Platte (35) am Außenumfang des perforierten Rohrs (32) in einer solchen Weise spiralförmig gewickelt ist, daß eine Seitenkante (35a) der Platte (35) in der Längsrichtung der Platte (35) an der anderen Seitenkante (35b) der Platte (35) anliegt und damit verschweißt ist.

20. Bohrlochsieb nach einem der Ansprüche 16 bis 19, worin die Metallplatte (42) Vorsprünge (43) aufweist, die sich mit einem vorgegebenen Zwischenraum in Längsrichtung erstrecken, und das rohrförmige Siebelement aus Drähten (46) in Form von Stäben besteht, die in einer Richtung angeordnet sind, welche die Vorsprünge kreuzt, um Schlitze (45) mit einer vorgegebenen Breite zu bilden, und an diese Vorsprünge (43) angeschweißt sind.

21. Bohrlochsieb nach einem der Ansprüche 8 bis 20, worin das rohrförmige Siebelement Drähte, die am Umfang des perforierten Rohrs parallel angeordnet sind, um Schlitze mit einer vorgegebenen Breite zu bilden, und sich in axialer Richtung des Siebs erstrecken, sowie einen Trägerstab, der mit einer vorgegebenen Steigung um den Außenumfang der Drähte gewickelt ist, aufweist.

## Revendications

1. Crépine bobinée comprenant un élément de filtration tubulaire flexible et allongé, **caractérisée en ce que** la crépine (1) est enroulée sous la forme d'une bobine, telle qu'elle sera obtenue par enroulement autour d'un tambour (5).

2. Crépine selon la revendication 1, dans laquelle l'élément de filtration tubulaire (4) comprend un moyen de support (6) disposé de façon cylindrique et s'étendant dans la direction axiale de la crépine (1) et des moyens de fil (8) disposés sur la périphérie externe du moyen de support (6) pour former des fentes (12) de largeur prédéterminée.

3. Crépine selon la revendication 1 ou 2, dans laquelle le moyen de support comprend des tiges support (6) disposées à un intervalle prédéterminé dans la direction circonférentielle de la crépine (1) et s'étendant dans la direction axiale de la crépine sur toute la longueur de celle-ci et le moyen de fil comprend un fil (8) enroulé en spirale sur la périphérie externe des tiges support (6).

4. Crépine selon l'une quelconque des revendications 1 à 3, dans laquelle l'élément de filtration tubulaire comprend une pluralité d'unités de crépine (2) comprenant chacune des tiges support (6) disposées à un intervalle prédéterminé dans la direction circonférentielle de la crépine et s'étendant dans la direction axiale de la crépine (1), un fil (8) enroulé en spirale sur la périphérie externe des tiges support (6) pour former une fente (12) de largeur prédéterminée, et une paire d'anneaux d'extrémité (3) auxquels les extrémités des tiges support (6) sont fixées et les extrémités adjacentes de ces unités de crépine (2) sont raccordées ensemble au niveau des anneaux d'extrémité (3).

5. Crépine selon l'une quelconque des revendications 1 à 4, dans laquelle le moyen de support comprend une tige support (9) enroulée en spirale pour former un pas prédéterminé sur toute la longueur de la crépine (1) et le moyen de fil comprend des fils (10) disposés en parallèle dans la direction circonférentielle pour former des fentes de largeur prédéterminée et s'étendant dans la direction axiale.

6. Crépine selon l'une quelconque des revendications 1 à 5, dans laquelle l'élément de filtration tubulaire comprend une pluralité d'unités de crépine (2) comprenant chacune une tige support enroulée en spirale pour former un pas prédéterminé, des fils disposés en parallèle dans la direction circonférentielle pour former des fentes de largeur prédéterminée et s'étendant dans la direction axiale, et une paire d'anneaux d'extrémité (3) auxquels les extrémités de la tige support sont fixées et les extrémités adjacentes de ces unités de crépine (2) sont raccordées ensemble au niveau des anneaux d'extrémité (3).

7. Crépine selon l'une quelconque des revendications 1 à 6, dans laquelle l'élément de filtration tubulaire comprend une feuille (14) sous la forme d'une ceinture composée de tiges support allongées (11) disposées en parallèle à un intervalle prédéterminé et de fils (13) sous la forme de tiges, qui sont disposés dans une direction coupant les tiges support et qui sont soudés aux tiges support (11), ladite feuille (14) étant courbée et enroulée en spirale de sorte qu'un bord latéral (14a) de la feuille (14) dans la direction longitudinale de la feuille (14) bute contre l'autre bord latéral (14b) de la feuille (14) et y est soudé.

8. Crépine bobinée comprenant un tube perforé allongé et flexible, formé avec des ouvertures à un intervalle prédéterminé et un élément de filtration tubulaire placé à la périphérie de celui-ci, **caractérisée en ce que** le tube perforé (18) est flexible et l'élément de filtration tubulaire (4) est enroulé sous la forme d'une bobine telle qu'elle sera obtenue par enroulement autour d'un tambour.

9. Crépine selon la revendication 8, dans laquelle l'élément de filtration tubulaire (4) est composé d'un fil (20) enroulé en spirale sur la périphérie externe du tube perforé (18) pour former une fente (19) de largeur prédéterminée.

10. Crépine selon la revendication 8 ou 9, dans laquelle l'élément de filtration tubulaire (4) comprend un moyen de support (21) disposé de façon cylindrique et s'étendant dans la direction axiale de la crépine (1), et des moyens de fil (20) disposés sur la périphérie externe du moyen de support (21) pour former des fentes de largeur prédéterminée.

11. Crépine selon l'une quelconque des revendications 8 à 10, dans laquelle le moyen de support comprend des tiges support (21) disposées à un intervalle prédéterminé dans la direction circonférentielle de la crépine et s'étendant dans la direction axiale de la crépine sur toute la longueur de celle-ci et le moyen de fil comprend un fil (20) enroulé en spirale sur la périphérie externe des tiges support (21).

12. Crépine selon la revendication 10, dans laquelle le moyen de support comprend une tige support enroulée en spirale pour former un pas prédéterminé sur toute la longueur de la crépine et le moyen de fil comprend des fils disposés en parallèle dans la direction circonférentielle pour former des fentes de largeur prédéterminée et s'étendant dans la direction axiale.

13. Crépine (1) selon l'une quelconque des revendications 10 à 12, dans laquelle l'élément de filtration tubulaire comprend une pluralité d'unités de crépine (2) comprenant chacune des tiges support (6) disposées à un intervalle prédéterminé dans la direction circonférentielle de la crépine et s'étendant dans la direction axiale de la crépine, un fil (8) enroulé en spirale sur la périphérie externe des tiges support (6) pour former une fente de largeur prédéterminée, et une paire d'anneaux d'extrémité (3) auxquels les extrémités des tiges support (6) sont fixées et les extrémités adjacentes de ces unités de crépine (2) sont raccordées ensemble au niveau des anneaux d'extrémité (3).

14. Crépine selon l'une quelconque des revendications 10 à 13, dans laquelle l'élément de filtration tubulaire comprend une pluralité d'unités de crépine (2) comprenant chacune une tige support enroulée en spirale pour former un pas prédéterminé, des fils disposés en parallèle dans la direction circonférentielle pour former des fentes de largeur prédéterminée et s'étendant dans la direction axiale, et une paire d'anneaux d'extrémité (3) auxquels les extrémités de la tige support sont fixées et les extrémités adjacentes de ces unités de crépine (2) sont raccordées ensemble au niveau des anneaux d'extrémité (3).

15. Crépine selon l'une quelconque des revendications 10 à 14, dans laquelle l'élément de filtration tubulaire comprend une feuille (14) sous la forme d'une ceinture composée de tiges support allongées, disposées en parallèle à un intervalle prédéterminé et des fils sous la forme de tiges, qui sont disposés dans une direction coupant les tiges support et qui sont soudés aux tiges support, ladite feuille (14) étant enroulée en spirale sur la périphérie externe du tube perforé (18), de sorte qu'un bord latéral (14a) de la feuille (14) dans la direction longitudinale de la feuille (14) bute contre l'autre bord latéral (14b) de la feuille (14) et y est soudé.

16. Crépine selon l'une quelconque des revendications 8 à 15, dans laquelle le tube perforé allongé est composé d'une feuille métallique perforée (35) qui est courbée en spirale, de sorte qu'un bord latéral (35a) de la feuille métallique (35) dans la direction longitudinale bute contre l'autre bord latéral (35b) de la feuille métallique (35) et y est soudé.

17. Crépine selon l'une quelconque des revendications 10 à 16, dans laquelle l'élément de filtration tubulaire comprend une feuille (35) sous la forme d'une ceinture composée de tiges support (36) allongées disposées en parallèle à un intervalle prédéterminé et des fils allongés (38) qui sont disposés dans une direction coupant les tiges support (36) et qui sont soudés aux tiges support (36), ladite feuille (35) étant courbée et enroulée en spirale, de sorte qu'un bord latéral (35a) de la feuille (35) dans la direction longitudinale de la feuille (35) bute contre l'autre bord latéral (35b) de la feuille (35) et y est soudé.

18. Crépine selon la revendication 16 ou 17, dans laquelle l'élément de filtration tubulaire comprend une feuille (35) sous la forme d'une ceinture composée de tiges support allongées (36) disposées en parallèle à un intervalle prédéterminé et des fils (38) qui sont disposés dans une direction coupant les tiges support (36) et soudés aux tiges support (36), ladite feuille (35) étant enroulée en spirale sur la périphérie externe du tube perforé (32), de sorte qu'un bord latéral (35a) de la feuille (35) dans la direction longitudinale de la feuille (35) bute contre l'autre bord latéral (35b) de la feuille (35) et y est soudé.

19. Crépine selon l'une quelconque des revendications 16 à 18, dans laquelle l'élément de filtration tubulaire comprend une feuille (35) sous la forme d'une ceinture composée de tiges support allongées (36) disposées en parallèle à un intervalle prédéterminé et de fils (38) sous la forme de tiges, qui sont disposés dans une direction coupant les tiges support (36) et qui sont soudés aux tiges support (36), ladite feuille (35) étant enroulée en spirale sur la périphérie externe du tube perforé (32), de sorte qu'un bord latéral (35a) de la feuille (35) dans la direction longitudinale de la feuille (35) bute contre l'autre bord latéral (35b) de la feuille (35) et y est soudé.

20. Crépine selon l'une quelconque des revendications 16 à 19, dans laquelle la feuille métallique (42) possède des projections (43) s'étendant dans la direction longitudinale à un intervalle prédéterminé et l'élément de filtration tubulaire est composé de fils (46) sous la forme de tiges, qui sont disposés dans une direction coupant les projections pour former des fentes (45) de largeur prédéterminée et qui sont soudés à ces projections (43).

21. Crépine selon l'une quelconque des revendications 8 à 20, dans laquelle l'élément de filtration tubulaire comprend des fils disposés en parallèle sur la périphérie du tube perforé afin de former des fentes de largeur prédéterminée et s'étendant dans la direction axiale de la crépine et une tige support enroulée à un pas prédéterminé autour de la périphérie externe des fils.
